# NEW EUROPEAN PATENT SPECIFICATION

(11) **EP 2 266 386 B2**
(45) Date of publication and mention of the opposition decision: **20.09.2017**
(45) Mention of the grant of the patent: 10.09.2014
(21) Application number: 10010427.2
(22) Date of filing: 30.07.2004
(51) Int. Cl.: A01F 15/07

(54) **COVERING SHEET FEEDER DEVICE FOR COVERING THE OUTER SURFACE OF AN AGRICULTURAL BALE**
ABDECKFOLIENZUFUHRVORRICHTUNG ZUR ABDECKUNG DER AUSSENFLÄCHE EINES LANDWIRTSCHAFTLICHEN BALLENS
DISPOSITIF D'ALIMENTATION POUR L'AMENEE D'UNE FEUILLE DE COUVERTURE DESTINEE A RECOUVRIR LA FACE EXTERNE D'UNE BOTTE AGRICOLE

(30) Priority: 31.07.2003 DE 10334987; 12.01.2004 DE 102004001773
(43) Date of publication of application: 29.12.2010
(62) Divisional of application: 04769103.5
(73) Proprietor: Kuhn-Geldrop B.V., 5667 KP Geldrop (NL)
(72) Inventor: Lange, Friedrich, 29643 Neukirchen (DE); Tenbult, Eric, 5531 KL Bladel (NL); Van Amstel, Leon, 6553 RW Geldrop (NL); Van Den Wildenberg, Johan, 6021 CT Budel (NL)
(74) Representative: Raynor, Simon Mark

(56) References cited:
- EP-A1- 0 931 449
- EP-A1- 0 965 263
- EP-A1- 1 344 448
- EP-A1- 1 862 060
- EP-A2- 1 142 469
- US-A- 5 243 806

## Description

This invention relates to a feeder device for covering the outer surface of an agricultural bale with a covering sheet e.g. of plastics film or netting.

As is well known, balers of agricultural crop material (such as hay, wilted grass to form silage, or straw) are usually of cylindrical shape - so called "big bales" or "round bales", or the bales may be of rectangular cross-section. Round bales are formed in round balers, and which can be of the fixed or variable chamber type.

It is usual to apply a covering layer of netting or plastics film to the cylindrical outer surface of a round bale, after the completion of formation of the bale in the bale-forming chamber. This covering layer is required in order to maintain the cylindrical shape of the compressed mass of material in the bale.

The bale is then discharged from the baler to fall onto the ground, for subsequent handling by other agricultural equipment. For some users, it is sufficient to pick-up the bales and load them onto a trailer, and then transport the bales to a covered storage area. For other users, it is desirable to apply weather proof cylindrical covering or wrapping the full surface of the bales as to ensilage them, and it is well known to use bale wrappers, which are of the rotating turntable or orbiting satellite film dispenser reel type. Bale wrappers can be used to wrap bales of both cylindrical shape, and also of parallelopipedal shape (rectangular cross section).

The present invention is concerned with a feeder device (for covering the outer surface of an agricultural bale with a covering sheet) which is capable of being incorporated within an agricultural baler.

It is known from EP 0432830 to provide a round baler which picks up a crop lying on the ground, such as hay, straw or wilted grass, and which feeds the crop to a bale-forming chamber in which a round (cylindrical) bale of compressed material is formed. After completion of the formation of the bale, a sheet dispenser mechanism is operated which applies a covering layer of sheet material e.g. netting or plastic film, to the cylindrical outer surface of the bale.

The dispenser mechanism has a feed device which presents a leading end of sheet material from a supply reel, to the outer surface of the bale.

The bale- forming chamber is defined by a belt-type of "apron", and a circular array of compression and/or transport rollers, and in which a feeding gap is defined between an adjacent pair of such rollers, through which the sheet material passes, so as to come into contact with the outer surface of the bale after completion of formation of the bale.

The feeder device has a feeder mouth, through which the sheet material passes, and the feeder device pivots from a withdrawn or rest/inactive position (which it takes up while the bale is being formed), to a feeding position (which it takes up after the bale has been formed) whereby the feeding mouth can insert the leading end of the sheet material through the feeding gap and into contact with the bale.

Rotation of the bale is in one direction, and in cooperation with rotation of one of the rollers adjacent the feeding gap in an opposite direction, this causes the leading end of the sheet material to be fed in the circumferential direction of the travelling outer surface of the bale. The leading end of sheet material is therefore trapped between the outer surface of the bale and this roller, and therefore attaches itself to the outer surface of the bale and moves with it, thereby withdrawing sheet material from the supply reel which progressively covers the outer surface of the bale as it continues its rotation. This is allowed to continue until such time as a required number of windings of cover layer have been applied to the outer surface of the bale.

The feeder mechanism is then returned to its rest position, and a cutting mechanism is operated, in order to cut the sheet material at a position intermediate the feeder mouth (in its now withdrawn position) and the outer surface of the bale, thereby leaving a new leading end or "tail" of sheet material projecting from the feeder mouth. This new leading end is firmly held by clamping devices incorporated in the feeder mouth, ready for a renewed cycle of bale-covering after discharge of the covered bale, and subsequent formation of a new bale.

Clearly, it is necessary for the sheet material to be firmly gripped, while the feeder device is in its withdrawn position and a new bale is being formed, so that the new leading end does not become entangled with other working components, but is ready for presentation to the outer surface of a newly formed bale.

The gripping of the sheet material must therefore be sufficiently strong to hold the sheet material during inaction of the feeder device (when a new bale is being formed), and during transportation of the film/net end from the inactive position to the feeding position, but be absent to prevent easy withdrawal of the sheet material from the supply reel (by rotation of the bale) after the leading end has been moved by the feeder mouth through the feeding gap and into contact with the outer surface of the bale.

In this known arrangement, the feeder mouth for the sheet material is formed effectively by a pair of cooperating clamping members which define a guide path between them through which the sheet material can pass, and these clamping members apply a sufficient clamping force to opposed sides of the sheet material in order to hold the sheet material and allow a small length or "tail" to project forwardly and hang freely from the feeder mouth.

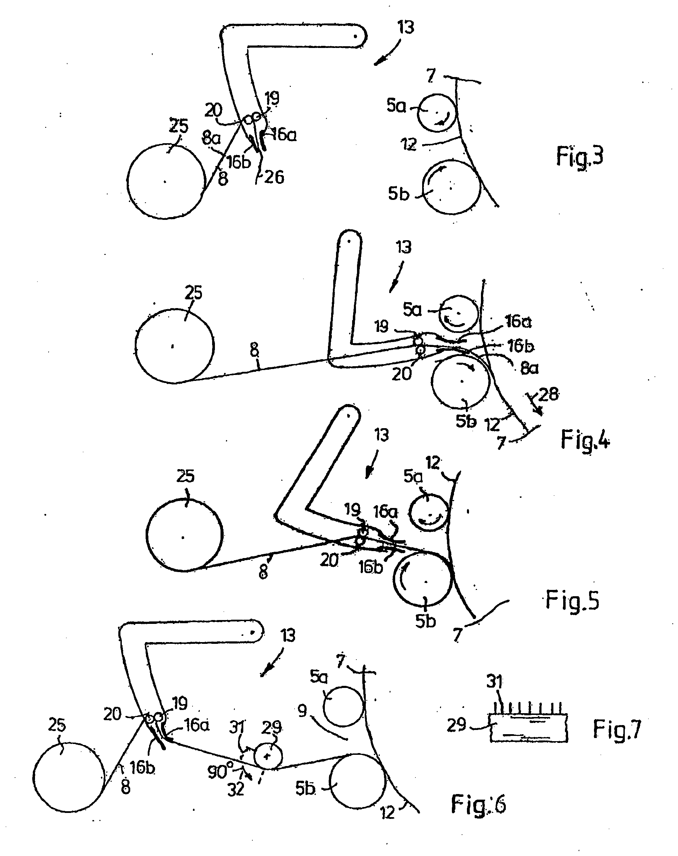

The clamping members therefore have specially formed engaging surfaces, one of which is formed with circular cut-outs along its leading edge, and the other of which has saw tooth projections along its leading edge (see Figures 5 and 6). These engaging surfaces are designed so as to fulfil the required dual function of: a) securely holding the leading end of sheet material while a new bale is being formed and b) allowing the sheet material to be withdrawn from the supply reel and to move over the engaging surfaces of the clamping members, when the fully formed bale rotates in order to pull successive windings of sheet material onto its outer surface.

However, in practical operation of the known feeder device, problems can arise, in that the supply reel may apply excessive tension to the sheet material, when the leading end of the sheet is intended to be securely held by the engaging surfaces, such that the circular cut-outs may not be able to exert a sufficient clamping force, with the result that the sheet material becomes disengaged from the feeder mouth, and hangs loosely, and is therefore liable to become entangled with other pieces of moving machinery. When this occurs, this requires the operation of the baler to be stopped, and for manual intervention in order to set up the feeder device again ready for a new cycle of operation.

This problem is further aggravated when, as is often the case, a large amount of dust is present which falls onto the surface of the sheet material and therefore makes it more slippy and more likely to become disengaged from its intended holding or clamping engagement between the engaging surfaces of the clamping member.

There is also the risk that the surface of the sheet material may be damaged by its engagement with the special formations on the leading edges of the engaging surfaces, which is clearly undesirable as the sheet material may then form unsatisfactory covering layers on the surface of the bale.

Further the grip of the clamping device known from prior art is too low to pull the film/net from the reel when moving from the inactive position to the feeding position.

EP 0965263 A1 describes another bale wrapping apparatus, which includes a net insertion assembly having a pair of clamping members known as a duckbill. The duckbill is used to insert and dispense net, twine or plastic film into the bale forming chamber, to wrap or bind the bale.

According to a preferred embodiment, the present invention seeks to provide an improved feeder device which is better able to hold the sheet material securely in the feeder mouth when the device is inactive and when it is moved from the inactive position to the feeding position, to engage more securely the leading end of the film/net with the bale, and to apply the film/net in a nice way over the full width or the edges and particularly when the feeder device is incorporated in a round baler.

It should be understood, however, that the feeder device of the invention may be supplied as original equipment in new balers or may be retro-fitted to existing balers.

According to the invention there is provided a feeder device as defined in independent claim 1. Preferred features of the invention are set out in the dependent claims.

According to the invention, the non-flexible lip, conveniently the upper lip, is especially shaped. The lip facing towards the side of the bale is smaller than the width of the sheet (film or net) and/or the bale, and extends to about the width of the bale or the sheet. When having entered the sheet on to the bale, the lip (and feeding device) is retained partly to a position in which the sheet is running over an angle over the lip. The side edges of the sheet (the longitudinal edges) will shortcut the corner and will be pushed outward to the side of the bale (so as to upset/curl up the sides), and the sheet can then be placed right on the end face of the bale, and as the bale is ejected, will run over the corner. This will therefore provide protection for the vulnerable corners, or prevent formation of so-called "shoulders".

In a feeder device according to claim 6, a pair of rollers is provided within the feeder mouth, and preferably comprises at least one freewheeling roller and at least one compression roller. The freewheeling roller may be rotatable freely, when the sheet is being grasped and pulled on to the surface of the rotating bale, while it is blocked against rotation in an opposition direction, even when the sheet is being withdrawn from the supply reel.

Such a gripping action between the two rollers is safe, and the sheet cannot be drawn back through the feeder mouth by accident and back on to the reel.

When, as is preferred, the compression roller is spring-pressed towards the freewheeling roller, the action of the spring enhances the gripping pressure on the sheet and enhances security against unintentional withdrawal of the sheet through the feeding mouth and in the direction towards the supply reel.

The surfaces of the lips facing the sheet may have a coarse texture, to prevent adhesion to the sheet.

It is further preferred that, in the path of the feeding device between a parking position and the feeding position, there may be provided a cutting rotor that, over the full width is provided with cutting parts, and the cutting rotor is rotated, at the end of the wrapping cycle, and the film is then cut off. It is advantageous to minimise any shifting of the free end of the film.

The cutting parts of the rotor may comprise pins.

The feeding device, with its feeding mouth, preferably is moveable along an arc from its inoperative position to its feeding position.

The feeding device also is preferably covered with a screen over the feeding mouth, throughout the full width between the mounting plates forming the mounting structure of the feeding device.

Preferred embodiments of the invention will now be described in detail, by way of example only, with reference to the accompanying drawings, in which:
Figure 1 is a side view illustration of a feeder device not according to the invention, incorporated in a round baler, and which is capable of covering the outer surface of a round bale, after formation in a bale forming chamber of the baler, with a covering sheet e.g. of netting or plastics film, and in which a feeding mouth of the feeder device for feeding the sheet material is shown in full outline in a withdrawn or inactive/rest position, and in dashed lines in a feeding position;
Figure 2 is a cross sectional view, to an enlarged scale, showing the feeder device and its feeding mouth in more detail (in this arrangement, the feeder device is pivotally mounted; but an alternative arrangement, may allow the feeding mouth to move along a reciprocating linear path);
Figure 3 shows the feeding mouth in its withdrawn position, holding the leading end of the sheet material in its feeding mouth;
Figure 4 illustrates the feeding mouth after movement of the feeding device to the feeding position;
Figure 5 shows the feeding mouth at an intermediate stage in reverse movement from the feeding position back towards the withdrawn position;
Figure 6 shows a further intermediate stage in the withdrawal movement, in which a cutting mechanism can operate to cut the sheet material at a position intermediate the feeding mouth and the outer surface of the bale;
Figure 7 is a plan view, to an enlarged scale, showing a detail of a cutting rotor used in the cutting mechanism;
Figures 8 to 11 are schematic illustrations, of detail of further modified embodiments of feeder device not according to the invention;
Figure 12 shows schematically application of a feeder device not according to the invention to apply covering sheet e.g. film to the outer surface of a bale of rectangular cross section, which is supported and rotated by a set of rollers of a bale handling device shown schematically also; and
Figures 13 and 14 are side and plan view illustrations of a feeder device according to the invention, showing the feeding of sheet material to cover the outer surface of a cylindrical bale.

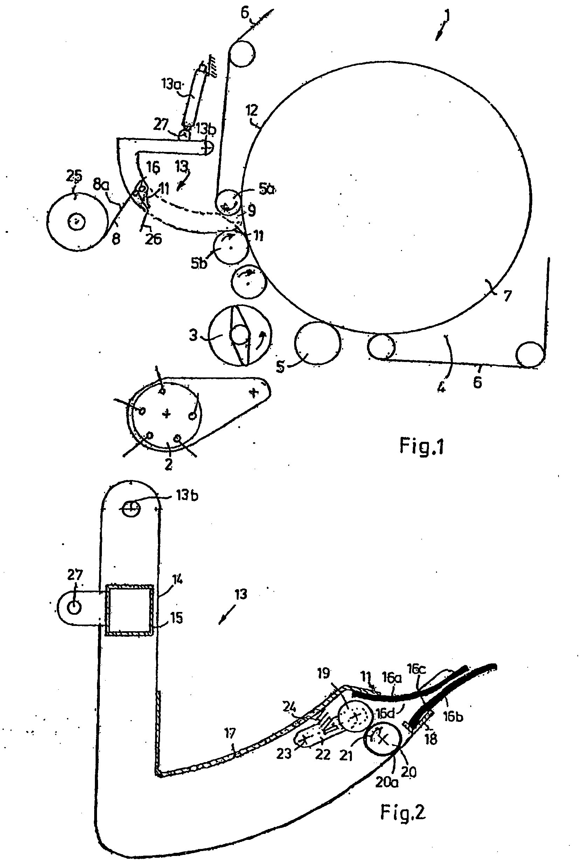

Referring first to Figures 1 to 7 of the drawings, a feeder device not of the invention is shown, by way of example only, incorporated within a round baler.

A round baler is shown schematically by reference 1, and the construction and operation of such balers are well known to those of ordinary skill in the art, and need not be described in detail herein. The baler has a rotating tine type pick up rotor 2 which picks up cut material lying on the ground and supplies it to a cutting or chopping rotor 3. The material lying on the ground may be hay, straw, or wilted grass for use in forming silage. The chopped material is then fed by the rotor 3 to a bale-forming chamber 4, which forms and compresses the material by continuously turning and taking in the material so that a cylindrical bale of progressively increasing diameter is formed, until a big or round bale 7 of sufficient size has been formed, having a cylindrical outer surface 12. To form and compress the bale, compression/transport rollers 5 and "apron" type belts 6 are used, according to known techniques.

When a bale 7 with the required diameter has been formed, the feeding of new material to the chamber 4 is interrupted, but the bale 7 continues to rotate. The feeding of sheet material to cover at least the cylindrical outer surface 12 then takes places, and the covering sheet may be netting, or plastics film. By way of example only, it will be assumed that the sheet material takes the form of plastics film 8, supplied from a supply reel 25.

In addition to compression/transport rollers 5, there are further rollers arranged adjacent to the outer circumference of the bale, and in particular rollers 5a and 5b, which define a feeding aperture 9 therebetween. The upper roller 5a is engaged by the apron belts 6, as shown, and forms a return end for the continuous movement of the belts around the outer periphery of the bale as it is being formed. However, the lower roller 5b is not engaged by the apron belts 6, and therefore it is possible to define a feeding aperture 9 between rollers 5a and 5b, through which the film 8 can be introduced, when it is required to apply a covering layer to the outer surface of the bale.

A feeder device 13 is provided, in order to feed and guide the delivery of the film 8 from the supply reel 25 to the outer surface 12 of the bale 7 and or roller 5a/b. The device 13, in the illustrated arrangement, is pivotally mounted, and is shown in full lines in a withdrawn/inactive position, and is shown in dashed outline in its feeding position, which it takes up after pivoting through approximately 90° about an upper horizontal pivot 13b. Figure 3 shows the feeder device 13 in the withdrawn position, whereas Figure 4 shows it in its feeding position. The device 13 comprises two plates 14 interconnected by a transverse bar 15, and which extend throughout the width of the bale chamber 4, measured along the axis of rotation of the bale 7.

The feeder device 13 has a feeding mouth 11, through which the film 8 is taken in order to engage with the outer surface 12 of the bale 7, after passing through the feeding aperture 9 defined between rollers 5a and 5b. The feeding mouth 11 essentially comprises a pair of cooperating elastomeric lips; of which upper lip 16a is connected to a screen 17 connected to the lower end of the forward one of the pair of metal plates 14, whereas lower lip16b is connected to transversely extending edge bar 18. The lips 16a, 16b extend throughout the full axial extent of the bale, and conveniently are made of rubber reinforced by textile material in web form. By such an arrangement, the lips 16a, 16b have a specific stable shape, but are resiliently deformable from the defined shape under load. The upper lip 16a has a lower engaging surface 16d, engaging with the upper surface 8a of film 8, and surface 16d is roughly textured, for example by perforation, or provision of blister pads, to provide firm gripping engagement, but prevent adhesion between the film and the lip. As an alternative, a silicone layer may be provided on the facing surface 16d.

Adjacent to the lips 16a and 16b, there are arranged two cooperating rollers 19 and 20, whose axes of rotation extend generally parallel to the axis of rotation of bale 7. The lower roller 20 is provided with a freewheel, which allows roller 20 to rotate only in the direction of the arrow 21, but prevents any rotation in a reverse direction. By contrast, the upper roller 19 is freely rotatable in either direction. However, roller 19 could also be provided with a freewheel, if required. The outer surface of the roller 20, provided with a freewheel, has a rough outer surface. The surface roughness/texture could be created by providing a sheet or film, for example a rubber film layer 20a. The opposed upper roller 19 is pivotally mounted on a support arm 22 which is rotatable about a horizontal pivot 23. A spring 24, mounted on screen 17, presses the upper roller 19 downwardly against the roller 20. The rollers 19 and 20 therefore are engaged firmly with each other, and are therefore able to hold the film 8 safely and reliably between them.

In Figure 3, the feeder device 13 is shown in the withdrawn position. The film 8 is pulled through and led between the rollers 19 and 20, and also remains held between the lips 16a, 16b, leaving a freely hanging leading end or "tail" 26. While the feeder device 13 is in the withdrawn position of Figure 3, the bale 17 continues to be formed, and during this time the rollers 5a and 5b rotate clockwise, as shown by the arrows. As soon as the bale 7 has reached a required diameter, which is adjustable, the picking up of crop material and supply to the chamber 4 is stopped. However, the bale 7 continues to be rotated.

The feeder device 13 is now pivoted downwardly in an anticlockwise direction about upper pivot 13b, under the operation of an actuator 13a which is connected to device 13 pivotally via pivot mounting 27. The device 13 moves to the feeding position shown in Figure 4, and in which the film 8 remains held firmly between the rollers 19 and 20, and with the leading end or tail 26 projecting forwardly therefrom, and into the feed gap 9 defined between rollers 5a and 5b. The film 8 is then capable of being safely firmly unwound from supply reel 25, and comes into contact with the material of the bale 7 on its outer surface 12 and or rollers 5a/b. To support to unrolling of the reel while moving to the feeding position the tensioning or stretching device could temporary (partly) be disengaged. The film 8 is arranged to be "tacky" on its contacting face, so that the film end 26 is able to adhere to the winding surface 12 of the bale 7, and is carried along with the bale in an anticlockwise direction shown by arrow 28. This is also assisted by the clockwise rotation of the lower roller 5b, which it also engages. As soon as the leading end 26 of the film 8 is securely engaging and moving with the cylindrical outer surface 12 of the bale 7, the feeder device 13 can then pivot back partly in the direction of its withdrawn position of Figure 3, to take up an intermediate position shown in Figure 5. The withdrawing is not causing extra force on the actuator since the tensioning force of the film is not added to the pulling back force. In the position of Figure 5, successive windings of covering layer can be applied to the surface 12 of the bale 7, by continued withdrawal of film 8 from the reel 25. When the required numbers of windings have been applied, the actuator 13a is operated to move the feeder device 13 back still further to the position shown in Figure 6. This then allows a cutting mechanism to be operated, in order to cut the length of film 8 which runs between the feeding mouth (lips 16a and 16b) and the outer surface of the bale 7, thereby to form a new leading end 26 of film 8. The cutting mechanism comprises a rotating cutter roll 29 having radially projecting cutting pins 31 or cutting knife. Rotation of roll 29 through about 90° causes the pins 31 to penetrate the film 8 and tear it apart. During this operation, the rollers 19 and 20 safely hold the newly formed film end 26, of which a forward end hangs freely from the mouth 11 defined by lips 16a and 16b.

The film 8 has a width which corresponds at least to the entire width of the machine i.e. extends axially throughout the length at least of the bale 7 measured along its axis, so that the film 8 can cover the entire cylindrical outer surface 12. This is possible because of the full amount of free space made available in the design of the baler, and because also of the arrangement of the rollers 5.

The screen 17 also extends throughout the full length of the feeder device 13. During feeding of film 8 onto the outer surface of the bale, it forms a shield over the exposed upper surface of the film 8 and rollers 19 and 20, and is therefore able to catch any dust which is inevitably present, and which might otherwise fall onto the surface of the film. When the feeder device 13 reverses to its withdrawn or inactive position, any dust which has been collected falls off, and therefore there is a self-cleaning function during each operating cycle.

It should be understood that the pivotable mounting of the feeding device 13, in the illustrated embodiment, is one mode of mounting only. It is within the scope of the invention for the feeder device to be mounted so as to be capable of movement such that the feeder mouth 11 moves along a linear path, both forward and reverse. Regardless of the way in which the feeder device 13 is mounted, the functional features performed by the rollers 19 and 20, and the flexible lips 16a, 16b, and also the cutting rotor 29, are able to perform with all the same technical advantages.

The illustrated embodiment of feeder device 13 therefore has a feeder mouth 11 which is mounted on a support (14, 15, 17), and means 13b is provided to mount the support 14, 15, 17 on the device 13 for movement between an inoperative withdrawn position (in which the feeder mouth 11 is spaced from the outer surface 12 of the bale 7 and with a leading end 26 of the sheet 8 projecting from the feeder mouth 11), and a feeding position in which the feeder mouth 11 is adjacent to the outer surface 12 of the bale 7 so that the leading end 26 of the sheet 8 can engage with the outer surface 12 of the bale 7. and or rollers 5a/b.

There is also a pair of roller 19, 20 mounted on the support 14, 15, 17 and located along the path of travel of the sheet 8 from the supply 25 to the feeder mouth 11, so as to be engageable with opposed faces of the sheet 8 and thereby hold the leading end 26 of the sheet 8 when the support 14, 15, 17 is in its inoperative withdrawn position, and also as it moves to its feeding position. Further, the holding action of the roller 19, 20 is capable of being overcome upon engagement of the sheet 8 with the outer surface 12 of the bale 7 and consequent pulling force being exerted upon the sheet 8.

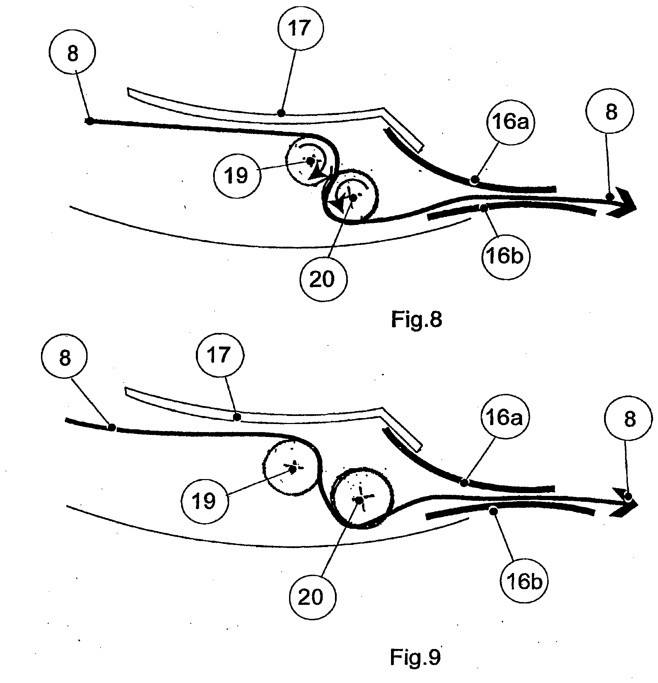

Referring now to Figures 8 to 11, parts corresponding with those already described have been given the same reference numerals. The successive Figures show minor variation to the arrangement of the feed/hold rollers 19,20. The arrangement of the flexible lips 16a, 16b in feeder mouth 11 is also illustrated.

In the embodiment of Figure 8, the rollers 19, 20 are shown in close proximity to each other, and with the sheet (film) 8 being fed in a sinuous manner engaging part of the outer periphery of clockwise rotating roller 19, and a part of the periphery of roller 20 which rotates in an anticlockwise direction. It will be noted that the axis of rotation of roller 20 is located downstream of the axis of roller 19, with respect to the path of travel of the film 8 through the feeder device. This to have more grip on the film/net without excessive pressing forces of the rollers onto each other, by the long contact surface between film and rollers,

The embodiment of Figure 9 shows an alternative arrangement, in which rollers 19 and 20 do not contact each other, but there is a small gap therebetween. As to abandon fully the pressing force between the roller, which may therefore be designed lighter. However, the path of travel of the film 8 is generally similar. For the good grip.

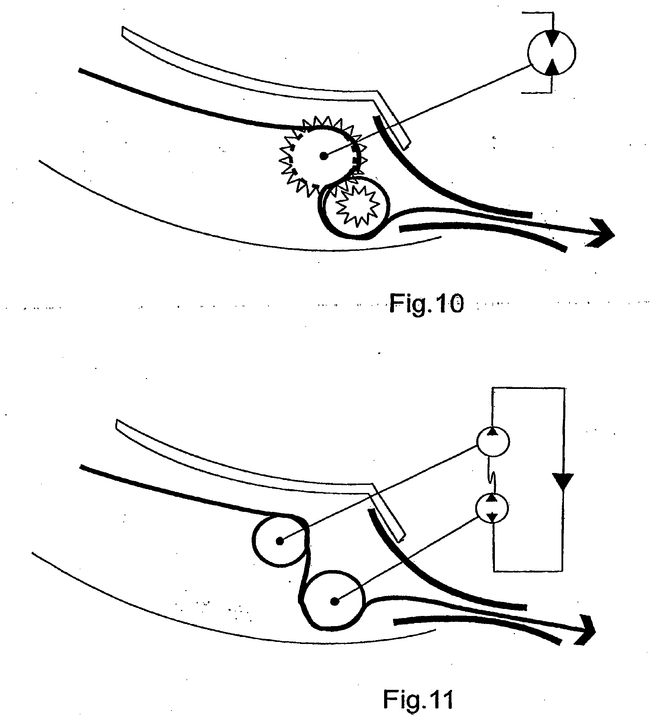

The embodiment of Figure 10 shows rollers 190 and 200, arranged closely adjacent to each other, similar to the embodiment of Figure9, and similar path of travel of the film 8. However, there is a gear drive connection between the rollers 190 and 200, with roller 200 rotating at a higher peripheral speed, so as to apply a pre-stretching action to the film 8, prior to issue from the feeding mouth 11 and wrapping around the outer surface of the bale. A convenient peripheral speed ratio between rollers 190 and 200 is 1:1.6. Hydraulic drive may be applied to the roller 190 or 200 as to lower the pulling off force on the film by the bale, and then the gear drive from roller 190 to roller 200 applies the required speed multiplication to the roller 200.

Figure 11 shows an arrangement similar to that of Figure 9 i.e. the rollers 19 and 20 have their axes of rotation spaced apart with respect to the general path of travel of the film 8 through the feeding device, but in this embodiment each of the rollers 19, 20 is driven by its own motor, which can be an electric motor or hydraulic motor. The drive arrangement is such that the peripheral speed of roller 20 is faster than the peripheral speed of roller 19, again preferably in a ratio of 1:1.6, in order to act as a pre-stretcher mechanism and or can support to lower the pulling force on the film by the bale.

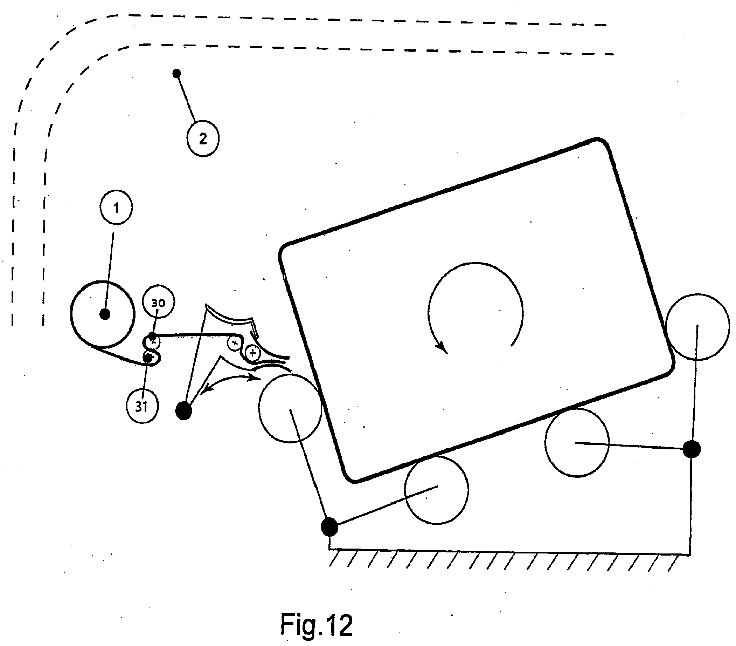

Figure 12 shows application of a feeder device according to the invention, in combination with a bale handling apparatus which is used to support and to rotate a bale of rectangular cross-section (parallelepiped) shape. The bale handling apparatus is shown schematically only, and may be a set of four support rollers of the type provided in a bale wrapper apparatus for applying stretch film to the outer periphery of a rectangular cross-section bale.

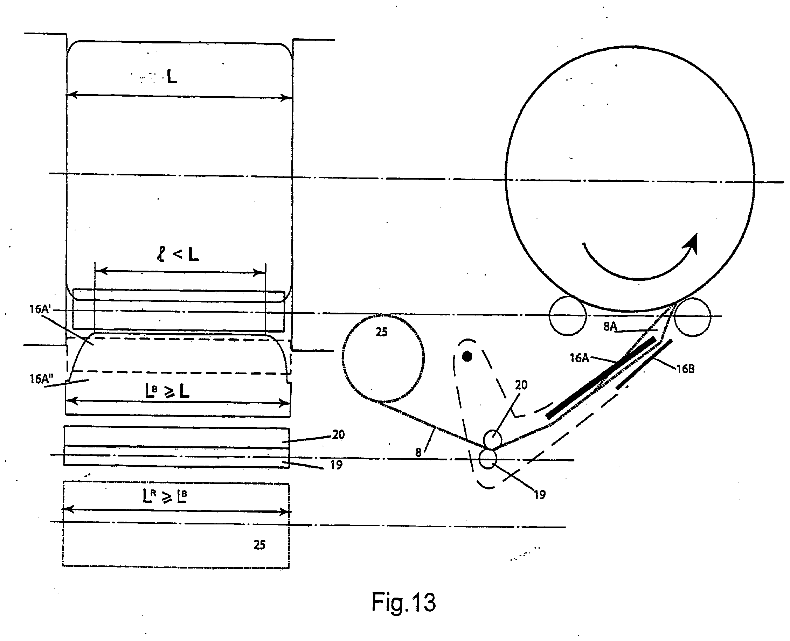

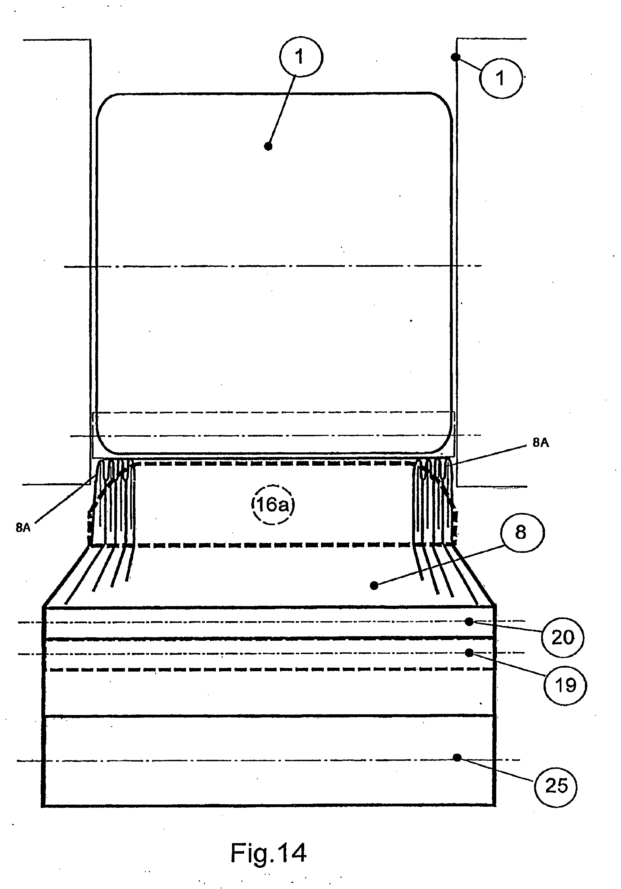

Figures 13 and 14 illustrate an embodiment of the invention and show schematically, in side view and plan view respectively, the relative width of a sheet of film being applied to the outer surface of a cylindrical bale, relative to the axial extent (the width) of the bale which is being covered. The entire cylindrical surface of the bale can be covered, and when the sheet being supplied has a greater width than the axial extent of the bale, it is possible for the sheet covering also to overlap the circular edges at each end of the bale, and partly to overlie a circumferential region of the circular end faces of the bale. Figure 13 right hand shows a feeder device in a somewhat retracted position as described earlier. The film 8 is running over an angle over a non-flexible lip 16A and the edges of the film/net are short cutting (8A) this angle. Because the leading end 16A' of lip 16A is smaller as the width of the film and the base width, to which the leading end is extending, the film/net is upsetting, curling the net/film towards the sides, which upset/curled up film/net is put just on the edge of the cylindrical side of the bale.

## Claims

1. A feeder device (13) for a baler that is operative to apply a sheet (8) to the cylindrical outer surface (12) of a cylindrical bale (7), said bale having a width and being rotatable about its axis in order to pull the sheet (8) from a supply of sheet material (25) via the feeder device (13) and so that the sheet (8) can form at least one covering layer on the outer surface (12) of the bale (7), in which the feeder device (13) comprises:
a feeder mouth (11) through which the sheet (8) can pass as it is withdrawn from the supply (25) to cover the outer surface (12) of the bale (7);
a movable support (14, 15, 17) on which the feeder mouth (11) is mounted;
means (13b) mounting the support (14, 15, 17) on the device (13) for movement between an inoperative withdrawn position in which the feeder mouth (11) is spaced from the outer surface (12) of the bale (7) and with a leading end (26) of the sheet (8) projecting from the feeder mouth (11), and a feeding position in which the feeder mouth (11) is adjacent to the outer surface (12) of the bale (7) so that the leading end (26) of the sheet (8) can engage with the outer surface (12) of the bale (7); and
a flexible lip (16b) arranged in the feeder mouth (11) so as to guide the leading end (26) of the sheet into engagement with the outer surface (12) of the bale (7); **characterised in that** the feeder mouth further comprises a non-flexible lip (16a), and said non-flexible lip has a leading end (16A'), whose width is smaller than the width of the bale and/or the sheet and the width of the lip is extended to a base (16A") which is about the width of the bale and/or the sheet in order to curl up the edges of the sheet and to fold the edges of the sheet over the corners of the bale.

2. A feeder device according to claim 1, in which there is an intermediate position of the feeder device so that the sheet can run at an angle of less than 180° over the edge of the lip (16a).

3. A feeder device according to any one of the preceding claims, in which one lip projects further than the other lip.

4. A feeder device according to any one of the preceding claims, including a pair of rollers (19, 20) mounted on the support (14, 15, 17) and located along the path of travel of the sheet (8) from the supply (25) to the feeder mouth (11), and so as to be engageable with opposed faces of the sheet (8) and thereby hold the leading end (26) of the sheet (8) when the support (14, 15, 17) is in its inoperative withdrawn position and as it moves to its feeding position, and in which the holding action of the roller (19, 20) is capable of being overcome upon engagement of the sheet (8) with the outer surface (12) of the rotating bale (7) and consequent pulling force being exerted on the sheet (8).

5. A feeder device according to claim 4, in which the freewheel roller (20) is rotatable in one direction when the covering sheet (8) is withdrawn from the supply (25) by the rotation of the bale (7), and in which the freewheel roller (2) is blocked against rotation in a reverse direction.

6. A feeder device according to claim 4 or claim 5, in which the rollers (19, 20) have relative peripheral speeds such that a pre-stretching action is applicable to the sheet (8), prior to application of the sheet (8) to the outer surface (12) of the bale (7).

7. A feeder device according to claim 6, in which the rollers (19, 20) are coupled drivingly to each other by gear wheels such that the downstream roller (20) is rotated at a higher speed than the upstream roller (19).

8. A feeder device according to any one of claims 4 to 7, in which the rollers (19, 20) are preceded by a pair of pre-stretch rollers 30/31 which are capable of applying a pre-stretching action to the sheet (8) after it leaves the supply (25).

9. A feeder device according to claim 8, in which the pre-stretch rollers are power driven.

10. A feeder device according to any one of claims 4 to 9, in which the rollers (19, 20) are greater in length than the width of the bale.

11. A feeder device according to any one of the preceding claims, in which a cutting device (29) is arranged along the path of travel of the feeding mouth (11), and is provided over its full length with cutting parts, said cutting rotor being operative to cut the sheet (8) when wrapping has been completed.

12. A feeder device according to any one of the preceding claims, in which the feeding mouth (11) is displaceable along an arc of travel, or along a linear path, between the inoperative position and the feeding position.

13. A feeder device according to any one of the preceding claims, in which a screen (17) is provided on the feeding mouth (11) to shield the sheet (8) as it passes through the feeding mouth, and prevent dust and other particles falling on the upper surface of the sheet.

## Patentansprüche

1. Zuführeinrichtung (13) für eine Ballenpresse, der zum Aufträgen einer Folie (8) auf die zylindrische Außenfläche (12) eines zylindrischen Ballens (7) funktionell ist, wobei der genannte Ballen eine Breite hat und um seine Achse drehbar ist, um die Folie (8) über die Zuführeinrichtung (13) von einem Folienmaterialvorrat (25) abzuziehen und damit die Folie (8) wenigstens eine Deckschicht auf der Außenfläche (12) des Ballens (7) bilden kann, wobei die Zuführeinrichtung (13) Folgendes aufweist:
eine Zuführöffnung (11), durch welche die Folie (8) hindurchlaufen kann, während sie vom Vorrat (25) abgezogen wird, um die Außenfläche (12) des Ballens (7) zu überziehen,
einen beweglichen Träger (14, 15, 17), an dem die Zuführöffnung (11) montiert ist,
Mittel (13b) zum Befestigen des Trägers (14, 15, 17) an der Einrichtung (13) zur Bewegung zwischen einer nicht betriebsbereiten zurückgezogenen Stellung, in welcher die Zuführöffnung (11) von der Außenfläche (12) des Ballens (7) beabstandet ist und wobei ein vorderes Ende (26) der Folie (8) aus der Zuführöffnung (11) herausragt, und einer Zuführstellung, in welcher die Zuführöffnung (11) an die Außenfläche (12) des Ballens (7) angrenzt, so dass das vordere Ende (26) der Folie (8) an der Außenfläche (12) des Ballens (7) angreifen kann, und
eine flexible Lippe (16b), die in der Zuführöffnung (11) angeordnet ist, um das vordere Ende (26) der Folie in Anlage an der Außenfläche (12) des Ballens (7) zu führen; **dadurch gekennzeichnet, dass** die Zuführöffnung ferner eine nicht flexible Lippe (16a) aufweist und die genannte nicht flexible Lippe ein vorderes Ende (16A') hat, dessen Breite kleiner als die Breite des Ballens und/oder der Folie ist, und die Breite der Lippe sich auf eine Basis (16A") ausdehnt, die etwa die Breite des Ballens und/oder der Folie ist, um die Ränder der Folie zu kräuseln und die Ränder der Folie über die Kanten des Ballens zu schlagen.

2. Zuführeinrichtung nach Anspruch 1, wobei es eine Zwischenstellung der Zuführeinrichtung gibt, so dass die Folie in einem Winkel von weniger als 180° über den Rand der Lippe (16a) laufen kann.

3. Zuführeinrichtung nach einem der vorhergehenden Ansprüche, wobei eine Lippe weiter vorsteht als die andere Lippe.

4. Zuführeinrichtung nach einem der vorhergehenden Ansprüche mit einem Paar Rollen (19, 20), die an dem Träger (14, 15, 17) montiert sind und sich am Bewegungsweg der Folie (8) vom Vorrat (25) zur Zuführöffnung (11) entlang befinden und um an entgegengesetzten Seitenflächen der Folie (8) in Anlage gebracht werden zu können und dadurch das vordere Ende (26) der Folie (8) festzuhalten, wenn der Träger (14, 15, 17) in seiner nicht betriebsbereiten zurückgezogenen Stellung ist und während er sich in seine Zuführstellung bewegt, und wobei die Festhaltewirkung der Rollen (19, 20) bei Angreifen der Folie (8) an der Außenfläche (12) des rotierenden Ballens (7) und nachfolgender auf die Folie (8) ausgeübter Zugkraft überwunden werden kann.

5. Zuführeinrichtung nach Anspruch 4, wobei die Freilaufrolle (20) in einer Richtung drehbar ist, wenn die Überzugsfolie (8) durch die Drehung des Ballens (7) vom Vorrat (25) abgezogen wird, und wobei die Freilaufrolle (2) in einer umgekehrten Richtung gegen Drehung gesperrt ist.

6. Zuführeinrichtung nach Anspruch 4 oder Anspruch 5, wobei die Rollen (19, 20) relative Umfangsgeschwindigkeiten haben, so dass eine Vordehnungswirkung auf die Folie (8) ausgeübt werden kann, bevor die Folie (8) auf die Außenfläche (12) des Ballens (7) aufgebracht wird.

7. Zuführeinrichtung nach Anspruch 6, wobei die Rollen (19, 20) durch Zahnräder antreibend miteinander gekoppelt sind, so dass die nachgelagerte Rolle (20) mit einer höheren Geschwindigkeit gedreht wird als die vorgelagerte Rolle (19).

8. Zuführeinrichtung nach Anspruch einem der Ansprüche 4 bis 7, wobei den Rollen (19, 20) ein Paar Vordehnungsrollen 30/31 vorgelagert ist, die eine Vordehnungswirkung auf die Folie (8) ausüben können, nachdem sie den Vorrat (25) verlassen hat.

9. Zuführeinrichtung nach Anspruch 8, wobei die Vordehnungsrollen motorisch betrieben sind.

10. Zuführeinrichtung nach einem der Ansprüche 4 bis 9, wobei die Rollen (19, 20) eine größere Länge als die Breite des Ballens haben.

11. Zuführeinrichtung nach einem der vorhergehenden Ansprüche, wobei eine Schneidvorrichtung (29) an dem Bewegungsweg der Zuführöffnung (11) entlang angeordnet ist und auf ihrer gesamten Länge mit Schneidteilen versehen ist, wobei der genannte Schneidrotor die Aufgabe hat, die Folie (8) durchzuschneiden, wenn die Umhüllung abgeschlossen ist.

12. Zuführeinrichtung nach einem der vorhergehenden Ansprüche, wobei die Zuführöffnung (11) an einem Bewegungsbogen entlang oder an einem linearen Weg entlang zwischen der nicht betriebsbereiten Stellung und der Zuführstellung verschiebbar ist.

13. Zuführeinrichtung nach einem der vorhergehenden Ansprüche, wobei an der Zuführöffnung (11) eine Abschirmung (17) bereitgestellt ist, um die Folie (8) beim Durchlaufen der Zuführöffnung zu schützen und zu verhindern, dass Staub und andere Teilchen auf die obere Oberfläche der Folie fallen.

## Revendications

1. Dispositif d'alimentation (13) pour une presse à balles qui est opérationnel pour appliquer une feuille (8) sur la surface cylindrique externe (12) d'une balle cylindrique (7), ladite balle ayant une largeur et étant pivotable sur son axe afin de tirer la feuille (8) à partir d'une alimentation de matériau en feuille (25) par l'intermédiaire du dispositif d'alimentation (13) et de sorte que la feuille (8) puisse former au moins une couche de couverture sur la surface externe (12) de la balle (7), dans lequel le dispositif d'alimentation (13) comprend : une bouche d'alimentation (11) à travers laquelle la feuille (8) peut passer tandis qu'elle est retirée de l'alimentation (25) afin de couvrir la surface externe (12) de la balle (7) ;
un support mobile (14, 15, 17), sur lequel la bouche d'alimentation (11) est montée ;
des moyens (13b) de montage du support (14, 15, 17) sur le dispositif (13) pour le mouvement entre une position en retrait de repos dans laquelle la bouche d'alimentation (11) est espacée de la surface externe (12) de la balle (7) et avec une extrémité avant (26) de la feuille (8) dépassant de la bouche d'alimentation (11), et une position d'alimentation dans laquelle la bouche d'alimentation (11) est adjacente à la surface externe (12) de la balle (7) de sorte que l'extrémité avant (26) de la feuille (8) puisse venir en prise avec la surface externe (12) de la balle (7) ; et
une lèvre souple (16b) disposée dans la bouche d'alimentation (11) afin de guider l'extrémité avant (26) de la feuille dans la mise en prise avec la surface externe (12) de la balle (7) ;
**caractérisé en ce que** la bouche d'alimentation comprend en outre une lèvre (16a) qui n'est pas souple, et ladite lèvre qui n'est pas souple a une extrémité avant (16A'), dont la largeur est inférieure à la largeur de la balle et/ou la feuille, et la largeur de la lèvre se prolonge vers une base (16A"), qui est d'environ la largeur de la balle et/ou la feuille afin de recourber les bords de la feuille et de plier les bords de la feuille sur les coins de la balle.

2. Dispositif d'alimentation selon la revendication 1, dans lequel il existe une position intermédiaire du dispositif d'alimentation, de sorte que la feuille puisse passer à un angle de moins de 180 ° sur le bord de la lèvre (16a).

3. Dispositif d'alimentation selon l'une quelconque des revendications précédentes, dans lequel une lèvre dépasse davantage que l'autre lèvre.

4. Dispositif d'alimentation selon l'une quelconque des revendications précédentes, comprenant une paire de rouleaux (19, 20) montés sur le support (14, 15, 17) et situés le long de la trajectoire de la feuille (8) à partir de l'alimentation (25) vers la bouche d'alimentation (11), et de sorte à pouvoir venir en prise avec des faces opposées de la feuille (8) et maintenir ainsi l'extrémité avant (26) de la feuille (8) lorsque le support (14, 15, 17) est dans sa position en retrait de repos et tandis qu'il se déplace vers sa position d'alimentation, et dans lequel l'action de maintien du rouleau (19, 20) est en mesure d'être surmontée lors de la mise en prise de la feuille (8) avec la surface externe (12) de la balle en rotation (7) et une force de traction conséquente étant exercée sur la feuille (8).

5. Dispositif d'alimentation selon la revendication 4, dans lequel le rouleau en roue libre (20) peut être tourné dans un sens lorsque la feuille de couverture (8) est retirée de l'alimentation (25) par la rotation de la balle (7), et dans lequel le rouleau en roue libre (2) est bloqué contre la rotation dans une direction inverse.

6. Dispositif d'alimentation selon la revendication 4 ou 5, dans lequel les rouleaux (19, 20) ont des vitesses périphériques relatives telles qu'une action de préétirage est applicable à la feuille (8), avant l'application de la feuille (8) sur la surface externe (12) de la balle (7).

7. Dispositif d'alimentation selon la revendication 6, dans lequel les rouleaux (19, 20) sont couplés en entraînement l'un à l'autre par des roues d'engrenage de telle sorte que le rouleau en aval (20) est mis en rotation à une vitesse supérieure par rapport au rouleau en amont (19).

8. Dispositif d'alimentation selon l'une quelconque des revendications 4 à 7, dans lequel les rouleaux (19, 20) sont précédés d'une paire de rouleaux préétirés 30/31, qui sont en mesure d'appliquer une action de préétirage sur la feuille (8) après qu'elle quitte l'alimentation (25).

9. Dispositif d'alimentation selon la revendication 8, dans lequel les rouleaux préétirés sont motorisés.

10. Dispositif d'alimentation selon l'une quelconque des revendications 4 à 9, dans lequel les rouleaux (19, 20) sont de longueur supérieure à la largeur de la balle.

11. Dispositif d'alimentation selon l'une quelconque des revendications précédentes, dans lequel un dispositif de coupe (29) est disposé le long de la trajectoire de la bouche d'alimentation (11), et est pourvu sur toute sa longueur de parties de coupe, ledit rotor de coupe étant opérationnel pour couper la feuille (8) lorsque l'emballage est terminé.

12. Dispositif d'alimentation selon l'une quelconque des revendications précédentes, dans lequel la bouche d'alimentation (11) est déplaçable le long d'un arc de déplacement, ou le long d'une trajectoire linéaire, entre la position de repos et la position d'alimentation.

13. Dispositif d'alimentation selon l'une quelconque des revendications précédentes, dans lequel un écran (17) est prévu sur la bouche d'alimentation (11) afin de protéger la feuille (8) tandis qu'elle traverse la bouche d'alimentation, et empêcher la poussière et autres particules de tomber sur la surface supérieure de la feuille.
